# EUROPEAN PATENT SPECIFICATION

(11) **EP 2 077 006 B1**
(45) Date of publication and mention of the grant of the patent: **09.03.2011**
(21) Application number: 07825482.8
(22) Date of filing: 24.10.2007
(51) Int. Cl.: H04W 8/22

(54) **NETWORK SUPPORT FOR NON-COMPLIANT MOBILE TERMINALS AND CORE NETWORK NODES**
NETZWERKUNTERSTÜTZUNG FÜR NICHTKOMPATIBLE MOBILE ENDGERÄTE UND KERNNETZWERKKNOTEN
SUPPORT DE RÉSEAU POUR DES TERMINAUX MOBILES NON CONFORMES ET NOEUDS DE RÉSEAU CENTRAL

(30) Priority: 26.10.2006 US 863042 P; 01.10.2007 US 865281
(43) Date of publication of application: 08.07.2009
(73) Proprietor: Telefonaktiebolaget LM Ericsson (publ), 164 83 Stockholm (SE)
(72) Inventor: OLSSON, Lasse, 444 91 Stenungsund (SE); RAMLE, Peter, 435 31 Mölnlycke (SE); AHLSTRÖM, Lars Gunnar Folke, 421 39 Västra Frölunda (SE); SUNDELL, Hans-Olof, 430 90 Öckerö (SE)
(74) Representative: Vejgaard, Christian
(86) International application number: PCT/IB2007/003199
(87) International publication number: WO 2008/050224

(56) References cited:
- EP-A- 0 994 616
- EP-A- 1 453 256
- EP-A- 1 571 800
- US-A1- 2006 073 824

## Description

### TECHNICAL FIELD OF THE INVENTION

This invention relates to radio telecommunication networks. More particularly, and not by way of limitation, the invention is directed to a method and network node for efficiency supporting mobile terminals and core network (CN) nodes that are not compliant with the latest technical specifications governing the operation of radio telecommunication networks and mobile terminals.

### DESCRIPTION OF RELATED ART

Today, service nodes in radio telecommunication core networks, such as Serving GPRS Service Nodes (SGSNs) are increasingly having to solve problems created by non-compliant mobiles terminals such as User Equipments (UEs) and Mobile Stations (MSs). From the viewpoint of operator and handset vendors, it is easier and more cost efficient to make updates and changes in one place (the SGSN) instead of in millions of places (all UE/MSs).

The problem for SGSN vendors is that the efforts to solve these problems for the non-compliant UE/MSs negatively affect the performance of the SGSN. In many cases, features added to the SGSN for the benefit of compliant UE/MSs must be turned off in order to serve the non-compiiant UE/MSs. This problem makes it extremely difficult to evolve the standard Two known examples of UE/MS non-compliant performance are:
* Certain PDA's do not comply with current Third Generation Partnership Project (3GPP) technical specifications regarding the optional information element (IE) "cell notification" and will not discard this IE as required by the 3GPP specifications. This leads to problems regarding "Attach" and "Routing Area Update" procedure. In order to solve the problem, the SGSN must remove this IE from the Accept messages that the SGSN sends to UE/MSs.
* Certain chipsets do not comply with current 3GPP specifications in the chipset's layer 3 protocol stack regarding at least the optional IE, "PDP Context Status". This makes it impossible to perform a Routing Area Update and may also make it difficult or impossible to reboot the UE/MS.

Thus, the existing solution is for the SGSN to drop the optional IE's that cause problems for non-compliant UE/MSs. While this solution enables the maximum number of UE/MSs to be served, it causes other problems when the IEs are dropped for all UE/MSs. For example, when removing the PDP Context Status IE, there is a risk of getting a Serving Radio Network Subsystem (SRNS) feature that is not as efficient as it is meant to be. There is also greater risk of a mismatch between the perception of which contexts are really active between the UE/MS and the SGSN.

In the future, as additional features are added to radio telecommunication networks, this problem will continue to get worse. Many enhanced features will simply not work if the optional lEs are excluded by the core network.

Similar problems occur when the SGSN has to support other CN nodes that are not compliant with the latest software version. This may occur because the operator and CN vendors decide not to update "faulty" CN nodes because the nodes are scheduled for replacement. There are also interoperability issues between home networks and visited networks which may cause software level differences between the SGSN and other CN nodes.

The problem may be exemplified by considering an SGSN-GGSN communication. If the SGSN sends a Create PDP Context Request message to the GGSN and includes an AACE parameter (implicitly using the GPRS Tunneling Protocol version 1. GTPv1) and the GGSN doesn't understand the "new" optional information element Radio Access Technology (RAT), then the GGSN will either send back a protocol error or will not respond at all. This causes the SGSN to switch to GTPv0, and the GGSN looses a lot of important information since GTPv0 does not contain all the fields needed. The SGSN-GGSN communication is then also "marked" as GTPv0 and this will cause additional problems when performing an SGSN Routing Area Update (ISRAU). Another example can be found in document US2006/073824 (RANGANATHAN MURAU)

What is needed in the art is a method and network node for effciently supporting non-compliant mobile terminals and CN nodes without negatively affecting the features that are available to compliant mobile terminals and nodes. The present invention provides such a system, node, and method.

### SUMMERY OF THE INVENTION

The present invention is directed to a method and network node for efficiently supporting non-compliant mobile terminals and CN nodes without negatively affecting the features that are available to compliant mobile terminals and nodes. Compliant mobile terminals and nodes enjoy all the features offered by messages containing optional and conditional IEs, while non-compliant mobile terminals and nodes are also provided with an opportunity to respond to an altered message in which the optional and conditional IEs have been excluded. The invention does this without increasing the signaling load in the network.

In one aspect, the present invention is directed to a method of serving mobile terminals in a radio telecommunication network. The method includes the steps of attempting to obtain a response from a mobile terminal by sending a standardized messages from a network node to the mobile terminal; and if a response is not received, attempting to obtain a response from the mobile terminal by sending an altered message from the network node to the mobile terminal. In one embodiment, the standardized message is sent a maximum of three times while awaiting a response from the mobile terminal, and the altered message is sent a maximum of two times while awaiting a response from the mobile terminal. The altered message may be created by removing optional and conditional IEs from the standardized message.

In one embodiment of the method, the network node is a core network (CN) service node. The CN service node supports other CN nodes by performing the steps of attempting to obtain a predefined response from a supported CN node by sending a standardized message from the service node to the supported CN node; and if the predefined response is not received, attempting to obtain a response from the supported CN node by sending an altered message from the service node to the supported CN node.

In another aspect, the present invention is directed to a network node for serving mobile terminals in a radio telecommunication network. The node includes means for sending a standardized message to a mobile terminal; means for determining whether a response is received from the mobile terminal in response to the standardized message; and means responsive to a determination that a response is not received, for sending an altered message to the mobile terminal.

In one embodiment of the network node, the node may serve a plurality of mobiles terminals, wherein a first portion of the mobile terminals is compliant with network specifications and a second portion of the mobile terminals is not compliant with the network specifications. In such a case, the network node may store an ID of a given mobile terminal in a list of non-compliant mobile terminals if the mobile terminal did not respond to the standardized message but did respond to the altered message. Thereafter, in a future session with the same mobile terminal, the node may send only the altered message to the mobile terminal a maximum of five times while awaiting a response from the mobile terminal. In addition, the network node may include means for providing the non-compliant mobile terminal a reduced feature set while providing compliant mobile terminals with a full feature set.

### BRIEF DESCRIPTION OF THE DRAWINGS

In the following, the essential features of the invention will be described in detail by showing preferred embodiments, with reference to the attached figures in which:
FIGS. 1A-1B are portions of a flow chart illustrating the steps of an exemplary embodiment of the method of the present invention;
FIG. 2 is a simplified block diagram of an exemplary embodiment of the network node of the present invention; and
FIG. 3 is a message flow diagram illustrating the flow of messages in another exemplary embodiment of the present invention.

### DETAILED DESCRIPTION OF EMBODIMENTS

The present invention is directed to a method and network node for efficiently serving non-compliant mobile terminals and CN nodes without negatively affecting the features that are available to compliant mobile terminals and nodes. In the embodiments described herein, the term SGSN is utilized generically to refer to any present or future generation of network service node. For example, the 3GPP Evolved Packet System (EPS), which includes an Evolved Packet Core (EPC) network and an Evolved UTRAN radio access network (EU-TRAN), includes a Mobility Management Entity (MME) and a User Plane Entity (UPE) which provide services to UE/MSs ahd other CN nodes. The MME is similar to the control plane of a SGSN, and performs user authentication, terminates Non-Access Stratum (NAS) signaling security and the like. The functions of the MME currently reside in the SGSN. The UPE is similar to the user plane of a RNC and SGSN, and terminates UP (User Plane) security. The functions of the UPE currently reside in an enhanced Node-B (e-NB). All of these service functions are included in the generic term SGSN for purposes of the present invention.

Under existing 3GPP technical specification such as 3GPP TS 24.008, the SGSN may send certain standardized messages to UE/MSs a maximum of five times if a proper response (as defined in the technical specifications) is not received from the target UE/MS. This procedure is changed in the present invention so that the SGSN sends the identical standardized message a reduced number of times (for example only three times), and then alters the message for subsequent attempts (for example the last two attempts). The message is altered to exclude "known problem" optional and/or conditional IEs in the last two attempts. In this way, a compliant UE/MS is given three chances to receive the standardized message and respond, thereby enjoying all the features offered by the optional and conditional IEs. A compliant UE/MS may also respond to one of the last two attempts and receive service with a reduced set of features. A non-compliant UE/MS may be unable to respond to the first three message attempts, but has two chances to respond after the SGSN alters the message to exclude the problem IEs.

The "known problem" IEs may be those for which it has been demonstrated that they cannot be processed by a significant number or percentage of non-compliant UE/MSs. The problem IEs may be stored in a memory associated with the SGSN or elsewhere in the network.

In one embodiment, the SGSN or other network node may also store an ID of the non-compliant UE/MS in memory so that the next time the SGSN serves the same UE/MS, network logic will recognize that the UE/MS is non-compliant, and cause the SGSN to send the only altered message up to a maximum of five times. In this way, network resources are not wasted by first sending the standardized message, which will not be properly answered. In the description herein, the network logic is implemented in the SGSN, although it may also be implemented in other network nodes or in a stand-alone node in communication with the SGSN.

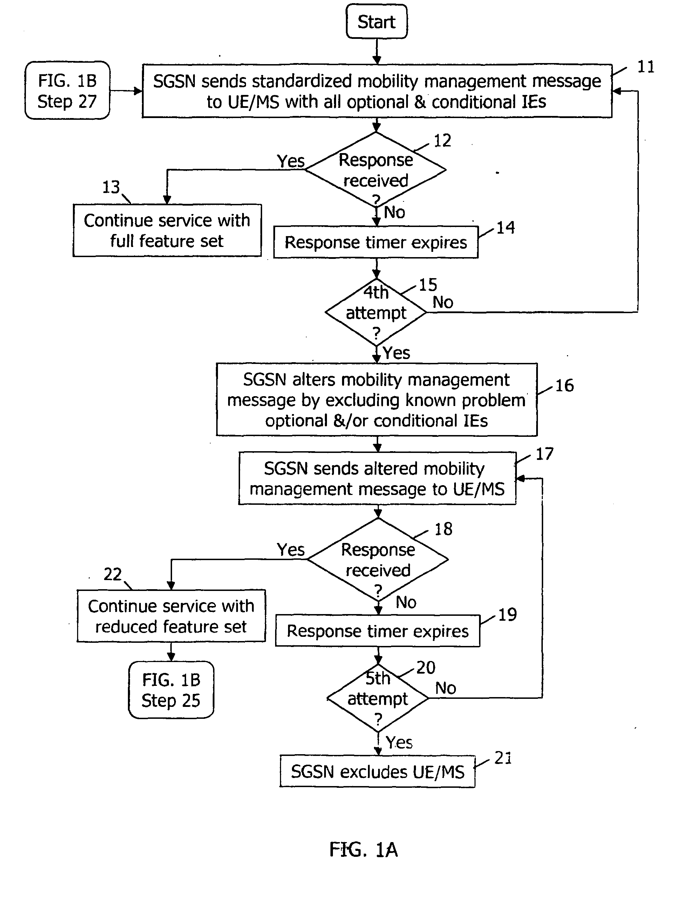

FIGS. 1A-1B are portions of a flow chart illustrating the steps of an exemplary embodiment of the method of the present invention. In this example flow chart, the standardized message is referred to as a mobility management message, although the invention is also applicable to other messages which the SGSN retransmits a number of times while awaiting a proper response from the UE/MS. Table 1 below (Table 11.4/3GPP TS 24.008: GPRS Mobility management timers - network side) shows several GPRS mobility management messages, which may be transmitted up to a maximum of five times while awaiting a proper response from the UE/MS.

**Table 1**

| **TIMER NUM.** | **TIMER VALUE** | **STATE** | **CAUSE OF START** | **NORMAL STOP** | **ON THE 1^{st}, 2^{nd}, 3^{rd}, 4^{th} EXPIRY Note 3** |
|---|---|---|---|---|---|
| T3322 | 6s | GMM-DEREG-INIT | DETACH REQ sent | DETACH ACCEPT received | Retransmission of DETACH REQUEST |
| T3350 | 6s | GMM-COMMON-PROC-INIT | ATTACH ACCEPT sent with P-TMSI and/or TMSI RAU ACCEPT sent with P-TMSI and/or TMSI P-TMSI REALLOC COMMAND sent | ATTACH COMPLETE received RAU COMPLETE received P-TMSI REALLOC COMPLETE received | Retransmission of the same message type, i.e. ATTACH ACCEPT, RAU ACCEPT or COMMAND |
| T3360 | 6s | GMM-COMMON-PROC-INIT | AUTH AND CIPH REQUEST sent | AUTH AND CIPH RESPONSE received AUTHENT-AND CIPHER-FAILURE received | Retransmission of AUTH AND CIPH REQUEST |
| T3370 | 6s | GMM-COMMON-PROC-INIT | MOBILITY MANAGEMENT sent | IDENTITY RESPONSE received | Retransmission of MOBILITY MANAGEMENT |

| | | | | | |
|---|---|---|---|---|---|
| NOTE 3: Typically, the procedures are aborted on the fifth expiry of the relevant timer. Exceptions are described in the corresponding procedure description of 3GPP TS 24.008. | | | | | |

Referring now to FIG. 1A, at step 11, the SGSN sends a standardized mobility management message to the UE/MS with all optional and conditional IEs. At step 12, it is determined whether a proper response, as defined in the 3GPP technical specifications, was received from the UE/MS. If so, the method moves to step 13 where the SGSN continues to service the UE/MS with a full feature set. If a proper response has not been received, the method moves to step 14 where the response timer expires. At step 15, it is determined whether this is the fourth message attempt (i.e., have three attempts already been made). If not, the method returns to step 11 where the SGSN again sends the mobility management message to the UE/MS.

However, if it is determined at step 15 that this is the fourth message attempt, the method moves to step 16 where the SGSN alters the mobility management message by excluding "known problem" optional and conditional IEs. At step 17, the SGSN sends the altered mobility management message to the UE/MS. At step 18, it is determined whether a proper response is received from the UE/MS. If not, the method moves to step 19 where the response timer expires. At step 20, it is determined whether this is the fifth or last message attempt. If not, the method returns to step 17 where the SGSN again sends the altered mobility management message to the UE/MS. Alternatively, if this was the fifth or last message attempt, the method moves to step 21 where the SGSN excludes the UE/MS.

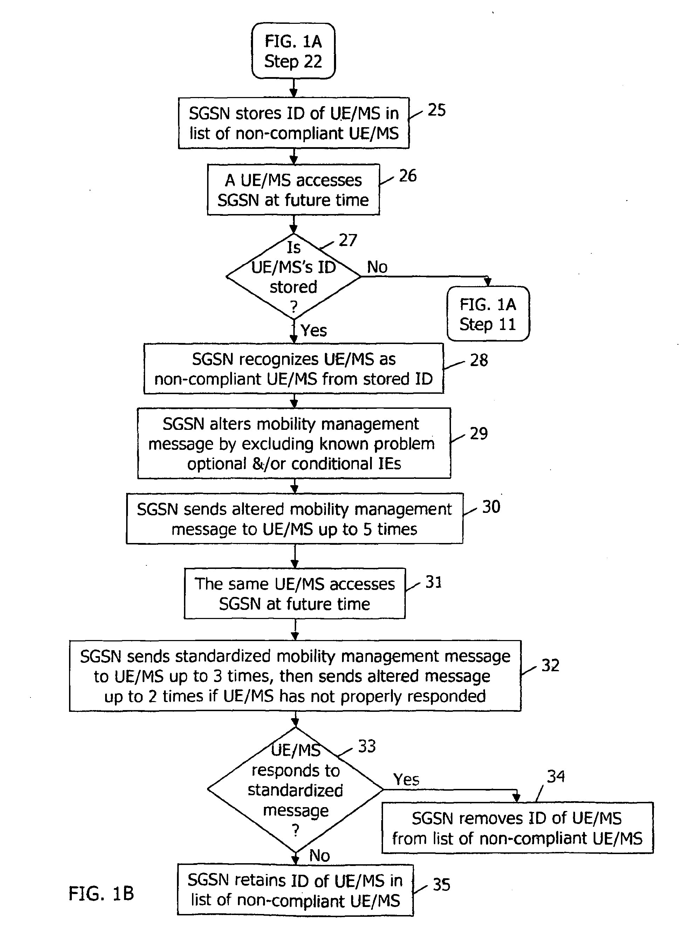

If it is determined at step 18 that a proper response is received to the altered mobility management message, the method moves to step 22 where the SGSN continues to service the UE/MS with a reduced feature set. The method may then proceed to FIG. 1B, step 25 for an optional extension of the method.
Table 2 below shows modifications to "Table 11.4/3GPP TS 24.008: GPRS mobility management timers - network side" in accordance with the present invention. As shown, the GPRS mobility management messages are transmitted with all optional and conditional IEs up to a maximum of three times (i.e., second expiry of the retransmission timer) while awaiting a proper response from the UE/MS. For the fourth and fifth message attempts (i.e., after the third and fourth expiry of the retransmission timer) the SGSN excludes "know problem" optional and conditional IEs from the retransmitted messages in order to adapt the messages for non-compliant UE/MSs.

**Table 2**

| **TIMER NUM.** | **TIMER VALUE** | **STATE** | **CAUSE OF START** | **NORMAL STOP** | **ON THE 1^{st}, 2^{nd}, EXPIRY** | **ON THE 3^{rd}, 4^{th} EXPIRY Note 3, Note 4** |
|---|---|---|---|---|---|---|
| T3322 | 6s | GMM-DEREG-INIT | DETACH REQ sent | DETACH ACCEPT received | Retransmission of identical DETACH REQUEST | Retransmissi on of adapted DETACH REQUEST |
| T3350 | 6s | GMM-COMMON-PROC-INIT | ATTACH ACCEPT sent with P-TMSI and/or TMSI RAU ACCEPT sent with P-TMSI and/or TMSI P-TMSI REALLOC COMMAND sent | ATTACH COMPLETE received RAU COMPLETE received P-TMSI REALLOCREALLOC P-TMSI REALLOC COMPLETE received | Retransmission of the same identical message type, i.e. ATTACH ACCEPT, RAU ACCEPT or COMMAND | Retransmissi on of the same adapted message type, i.e. ATTACH ACCEPT, RAU ACCEPT or REALLOC COMMAND |
| T3360 | 6s | GMM-COMMON-PROC-INIT | AUTH AND CIPH REQUEST sent | AUTH AND CIPH RESPONSE received AUTHENT-AND CIPHER-FAILURE received | Retransmission of identical AUTH AND CIPH REQUEST | Retransmissi on of adapted AUTH AND CIPH REQUEST |
| T3370 | 6s | GMM-COMMON-PROC-INIT | MOBILlTY MANAGEMENT sent | IDENTITY RESPONSE received | Retransmission of identical MOBILITY MANAGEMENT | Retransmissi on of adapted MOBILITY MANAGEME NT |

| | | | | | | |
|---|---|---|---|---|---|---|
| NOTE 3: Typically, the procedures are aborted on the fifth expiry of the relevant timer. Exceptions are described in the corresponding procedure description of 3GPP TS 24.008. NOTE 4: The messages may be adapted to solve non 3GPP compliant handset issues on the last two retransmissions. | | | | | | |

Referring now to FIG. 1B, at step 25, the SGSN stores an ID of the UE/MS in a list of non-compliant UE/MSs. At step 26, a UE/MS accesses the SGSN at a future time. At step 27 it is determined whether the accessing UE/MS's ID is stored as a non-compliant UE/MS. If not, the method returns to FIG. 1A. step 11. If this UE/MS's ID is stored, the method moves to step 28 where the SGSN recognizes this UE/MS as a non-compliant UE/MS from the stored ID, At step 29, the SGSN alters the standardized mobility management message by excluding "known problem" optional and conditional IEs. At step 30, the SGSN sends only the altered mobility management message to the UE/MS a maximum of five times.

It is possible, however, that a compliant UE/MS may not receive the first three message attempts, but may then receive and respond to one of the altered message attempts. In this case, the UE/MS may be falsely placed on the list of non-compliant UE/MSs: Therefore, if the SGSN repeatedly serves the same UE/MS, the GGSN may periodically revert to first sending the standardized message to the UE/MS in order to provide the UE/MS the opportunity to respond. If the UE/MS properly responds to the standardized message, the SGSN then removes the UE/MS's ID from the list of non-compliant UE/MSs.

Thus, at step 31, a UE/MS that was placed on the list of non-compliant UE/MSs accesses the SGSN at a future time. At step 32, the SGSN sends the standardized mobility management message to the UE/MS a maximum of three times, and then sends the altered message a maximum of two times if the UE/MS has not properly responded. At step 33, it is determined whether or not the UE/MS properly responds to the standardized message, If so, the method moves to step 34 were the SGSN removes the ID of the UE/MS from the list of non-compliant UE/MSs. However, if the UE/MS does not respond to the standardized message, but again responds to the altered message, the method moves to step 35 where the SGSN retains the ID of the UE/MS on the list of non-compliant UE/MSs.

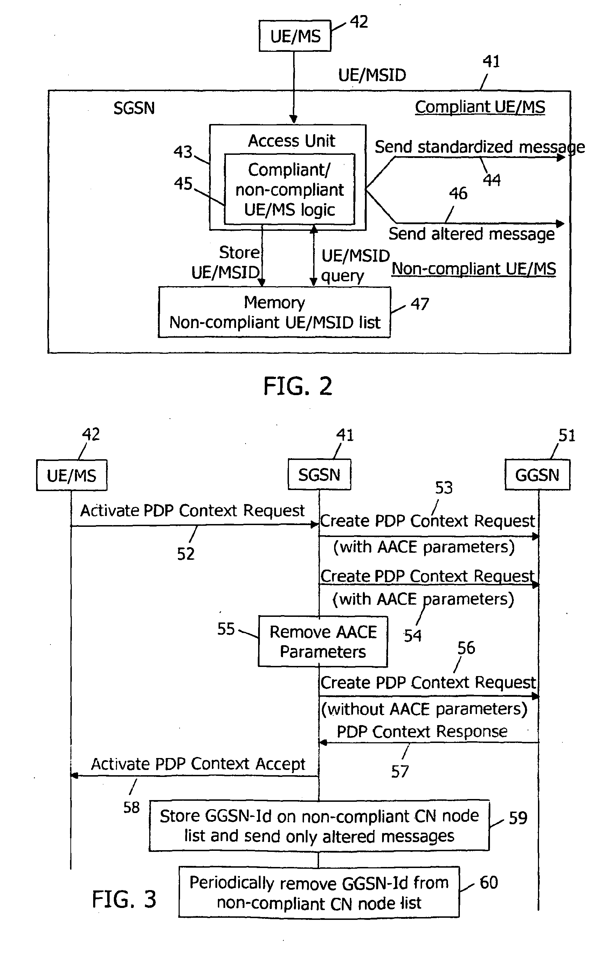

FIG. 2 is a simplified block diagram of an exemplary embodiment of the network node of the present invention. An SGSN 41 is shown through which a UE/MS 42 accesses the core network of a radio telecommunication system. An access unit 43 receives the UE/MSID and performs the process shown in FIGS. 1A-1B. When a UE/MS does not respond properly to three attempts to send a standardized message 44 with all optional and conditional IEs, logic within the access unit labeled as "compliant/non-compliant UE/MS logic" 45 causes the SGSN to send an altered message 46 in the last two message attempts. As noted above, in the altered message the SGSN excludes "known problem" optional and conditional IEs.

If the UE/MS 42 responds to the altered message 46, the compliant/non-compliant UE/MS logic 45 stores the UE/MSID in a non-compliant UE/MS memory 47. Thereafter, if the same UE/MS accesses the SGSN 41, the compliant/non-compliant UE/MS logic queries the memory 47 to determine whether the UE/MSID is stored. If not, the logic causes the SGSN to send the standardized message 44 to the UE/MS in accordance with the process shown in FIGS. 1A-1B. If the UE/MSID is stored in the memory, the logic causes the SGSN to send the altered message 46 to the UE/MS up to a maximum of five times.

As noted above, it is possible that a compliant UE/MS 42 may not receive the first three message attempts, but may then receive and respond to one of the altered message attempts. In this case, the UE/MS may be falsely placed on the list of non-compliant UE/MSs. Therefore, if the SGSN repeatedly serves the same UE/MS, the SGSN may periodically revert to first sending the standardized message to the UE/MS in order to provide the UE/MS the opportunity to respond. If the UE/MS properly responds to the standardized message, the compliant/non-compliant UE/MS logic 45 removes the UE/MSID from the list of non-compliant UE/MSs stored in the non-compliant UE/MS memory 47.

When the SGSN is supporting another CN node rather than a UE/MS, the invention performs similar functions. The existing procedure in 3GPP 29.060 regarding retransmission of certain messages states that the SGSN will send the same identical message to the other CN node up to N3 times. The present invention changes this process and specifies that the SGSN will send the identical message a reduced number of times (for example N3-1 times), and will then alter the message and exclude "known problem" optional IEs in subsequent attempts (for example the last attempt). The SGSN may also store the CN-Id of the CN node in a list of non-compliant CN nodes. Thereafter, for future messages, the SGSN may send the altered message from the start. Optionally, the CN-Id may be periodically reset (for example every 24 hours) so that the CN-Id is removed from the list of non-compliant CN nodes. This enables CN nodes that have been upgraded or CN nodes that have been wrongly placed on the non-compliant list to once again take advantage of the full set of features offered by compliant signaling.

FIG. 3 is a message flow diagram illustrating the flow of messages in another exemplary embodiment of the present invention. In this embodiment, the SGSN 41 is supporting a non-compliant GGSN 51. When the UE/MS 42 sends an Activate PDP Context Request message 52, the SGSN sends a Create PDP Context Request message 53, including AACE parameters, to the GGSN. If the GGSN sends back a protocol error, or there is no response within the time period specified by the SGSN's T3-Response timer, the SGSN sends a second Create PDP Context Request message 54, including AACE parameters, to the GGSN. If the GGSN again sends back a protocol error, or there is no response within the time period specified by the SGSN's T3-Response timer, the SGSN alters the Create PDP Context Request message by removing the AACE parameters at 55.

The SGSN 41 then sends an altered Create PDP Context Request message 56, without AACE parameters, to the GGSN 51. The non-compliant GGSN then responds by returning a Create PDP Context Response message 57. The SGSN then sends an Activate PDP Context Accept message 58 to the UE/MS 42.

At 59, the SGSN 41 may also store the GGSN-Id in a list of non-compliant CN nodes. Thereafter, for future messages, the SGSN may send only altered messages to the GGSN 51. Optionally, at 60, the SGSN may periodically reset the GGSN-Id (for example every 24 hours) so that the GGSN-Id is removed from the list of non-compliant CN nodes. If the GGSN has been upgraded or if the GGSN was wrongly placed on the non-compliant list, the GGSN can once again take advantage of the full set of features offered by compliant signaling.

In this manner, the SGSN can support non-compliant CN nodes without adversely affecting the full-featured support provided to compliant CN nodes.

Although preferred embodiments of the present invention have been illustrated in the accompanying drawings and described in the foregoing Detailed Description, it is understood that the invention is not limited to the embodiments disclosed, but is capable of numerous rearrangements, modifications, and substitutions without departing from the scope of the invention. The specification contemplates any all modifications that fall within the scope of the invention defined by the following claims.

## Claims

1. A method of supporting mobile terminals in a radio telecommunication network, said method being **characterized by**:
attempting to obtain a predefined response from a mobile terminal (42) by sending a standardized message (44) from a networks node (41) to the mobile terminal a maximum of three times while awaiting the predefined response from the mobile terminal; and
attempting to obtain a response from the mobile terminal by sending an altered message (46) from the network node to the mobile terminal, if the predefined response is not received from the mobile terminal in response to sending the standardized message three times.

2. The method as recited in claim 1, wherein the step of attempting to obtain a response from the mobile terminal by sending an altered message includes:
if the predefined response is not received from the mobile terminal after sending the standardized message three times, creating the altered message by excluding at least one information element from the standardized message; and
sending the altered message from the network node to the Mobile terminal a maximum of two times white awaiting the response from the mobile terminals.

3. The method as recited in claim 2, wherein the step of creating an altered message includes deleting predefined optional and/or conditional information elements from the standardized message.

4. The method as recited in claim 3, further comprising predefining the optional and conditional information elements by identifying information elements that cannot be processed by mobile terminals that are not compliant with network technical specifications.

5. The method as recited in claim 2, further comprising the steps of:
if the response is received from the mobile terminal in response to the altered message, storing an ID of the mobile terminal in a list of non-compliant mobile terminals; and
if the mobile terminal accesses the network node at a future time
recognizing the mobile terminal is a non-compliant mobile terminal from the stored ID; and
sending only the altered message to the mobiles terminals a maximum of five times while awaiting a response from the non-compliant mobile terminal.

6. The method as recited in claim 5, further comprising the steps of:
periodically sending the standardized message to the mobile terminal;
and
if the mobile terminal responds to the standardized message, removing the ID of the mobile terminal from the list of non-compliant mobile terminals.

7. A method in a core network, CN, service node (41) for supporting other CN nodes, said method **characterized by**:
attempting to obtain a predefined response from a supported CN node (51) by sending a standardized message (53, 54) from the CN service node to the supported CN node a maximum of two times while awaiting the predefined response from the supported CN node: and
attempting to obtain a response from the supported CN node by sending an altered message (56) from the service node to the supported CN node, if the predefined response is not received from the supported CN node.

8. The method as recited in claim 7, wherein the step of attempting to obtain a response from the supported CN node by sending an altered message includes:
if the predefined response is not received from the supported CN node after sending the standardized message two times, creating the altered message by excluding at least one information element from the standardized message; and
sending the altered message from the CN service node to the supported CN node one time while awaiting the response from the supported CN node

9. The method as recited in claim 8, wherein the step of creating an altered message includes deleting predefined optional and/or conditional information elements from the standardized message.

10. A network node (41) for serving mobile terminals in a radio telecommunication network, said network node being **characterized by**:
means (44) for sending a standardized message to a mobile terminal (42) a maximum of three times While awaiting a predefined response from the mobile terminal;
means (45) for determining whether the predefined response is received from the mobile terminal in response to the standardized message, and
means (46) responsive to a determination that a response is not received, for sending an altered message to the mobile terminal.

11. The network node as recited in claim 10, wherein the means for sending an altered message includes:
means for treating the altered message by excluding at least one information element from the standardized message if the predefined response is not received from the mobile terminal after sending the standardized message three times; and
means for sending the altered message from the network node to the mobile terminal a maximum of two times while awaiting the predefined response from the mobile terminal.

12. The network node as recited in claim 11, wherein the means for creating an altered message includes means for deleting predefined optional and/or conditional information elements from the standardized message.

13. The network node as recited in claim 12, further comprising means for predefining the optional and conditional information elements by identifying information elements that cannot be processed by mobile terminals that are not compliant with network technical specifications.

14. The network node as recited in claim 11, further comprising. means for storing an ID of the mobile terminal in a list of non-compliant mobile terminals if the predefined response is received from the mobile terminal in response to the altered message;
means for recognizing the mobile terminal is listed as a non-compliant mobile terminal during a future session; and
means for sending only the altered message to the mobile terminal a maximum of five times during the future session.

15. The network node as recited in claim 14, further comprising:
means for periodically sending the standardized messages to the mobile terminal and
means for removing the ID of the mobile terminal from the list of non-compliant mobile terminals if the mobile terminal responds to the standardized message.

16. The network node as recited in claim 10, wherein the network node serves a plurality of mobile terminals, Wherein a first portion of the mobile terminals is compliant with network specifications and a second portion of the mobile terminals is not compliant with the network specifications, the network node further comprising:
means for identifying a given mobile terminal as a non-compliant mobile terminal if the given mobile terminal responded to the altered message; and
means (55) for providing the non-comptiantt mobile terminal a reduced feature set while providing compliant mobile terminals with a full feature set.

17. The network node as recited in claim 16, wherein the means for spending the altered message is adapted to send the altered message a maximum of two times while awaiting a response from the given mobile terminal.

18. The network node as recited in claim 17, further comprising:
means for storing an ID of the given mobile terminal in a list of non-compliant mobile terminals if the response is received from the mobile terminal in response to the altered message;
means for recognizing the mobile terminal is listed as a non-compliant mobile terminal during a future session; and
means for sending only the altered message to the mobile terminal a maximum of five times during the future session.

19. The network node as recited in claim 18, further comprising means for periodically sending the standardized message to the mobile terminal; and
means for removing the ID of the mobile terminal from the list of non-compliant mobile terminals if the mobile terminal responds to the standardized message.

20. The network node as recited in claim 19, wherein the network node is a Serving GPRS Service Node, SGSN.

## Patentansprüche

1. Verfahren zum Unterstützen von Mobilendgeräten in einem Funkkommunikationsnetz, das Verfahren **gekennzeichnet durch**:
Versuchen, eine im Voraus definierte Antwort von einem Mobilendgerät (42) durch Senden einer standardisierten Nachricht (44) von einem Netzknoten (41) an das Mobilendgerät für maximal drei Mal zu erhalten, während auf die im Voraus definierte Antwort von dem Mobilendgerät gewartet wird; und
Versuchen, eine Antwort von dem Mobilendgerät **durch** Senden einer geänderten Nachricht (46) von dem Netzknoten an das Mobilendgerät zu erhalten, wenn die im Voraus definierte Antwort als Reaktion auf dreimaliges Senden der standardisierten Nachricht nicht von dem Mobilendgerät empfangen wird.

2. Verfahren nach Anspruch 1, wobei der Schritt zum Versuchen, eine Antwort von dem Mobilendgerät durch Senden einer geänderten Nachricht zu erhalten, enthält:
wenn die im Voraus definierte Antwort, von dem Mobilendgerät nicht nach dreimaligem Senden der standardisierten Nachricht empfangen wird, Erzeugen der geänderten Nachricht durch Ausschließen mindestens eines Informationselements aus der standardisierten Nachricht; und
Senden der geänderten Nachricht von dem Netzknoten an das Mobilendgerät für maximal zwei Mal, während auf die Antwort von dem Mobilendgerät gewartet wird.

3. Verfahren nach Anspruch 2, wobei der Schritt zum Erzeugen einer geänderten Nachricht enthält, im Voraus definierte optionale und/oder bedingte Informationselemente aus der standardisierten Nachricht zu löschen.

4. Verfahren nach Anspruch 3, weiter umfassend, die optionalen und bedingten Informationselemente durch Identifizieren von Informationselementen, die nicht von Mobilendgeräten, die nicht mit netztechnischen Spezifikationen kompatibel sind, verarbeitet werden können, im Voraus zu definieren.

5. Verfahren nach Anspruch 2, weiter die folgenden Schritte umfassend:
wenn die Antwort von dem Mobilendgerät als Reaktion auf die geänderte Nachricht empfangen wind, Speichern einer ID des Mobilendgeräts in einer Liste nicht kompatibler Mobilendgeräte; und
wenn das Mobilendgerät den Netzknoten zu einem zukünftigen Zeitpunkt aufruft:
Erkennen aus der gespeicherten ID, dass das Mobilendgerät ein nicht kompatibles Mobilendgerät ist; und
Senden nur der geänderten Nachricht an das Mobilendgerät für maximal fünf Mal, während auf eine Antwort von dem nicht kompatiblen Mobilendgerät gewartet wird.

6. Verfahren nach Anspruch 5, weiter die folgenden Schritte umfassend:
regelmäßiges Senden der standardisierten Nachricht an das Mobilendgerät; und
wenn das Mobilendgerät auf die standardisierte Nachricht antwortet, Entfernen der ID des Mobilendgeräts aus der Liste nicht kompatibler Mobilendgeräte.

7. Verfahren in einem Dienstknoten (41) eines Kernnetzes, CN, zum Unterstützen anderer CN-Knoten, das Verfahren **gekennzeichnet durch**:
Versuchen, eine im Voraus definierte Antwort von einem unterstützten CN-Knoten (51) **durch** Senden einer standardisierten Nachricht (53, 54) von dem CN-Dienstknoten an den unterstützen CN-Knoten für maximal zwei Mal zu erhalten, während auf die im Voraus definierte Antwort von dem unterstützten CN-Knoten gewartet wird; und
Versuchen, eine Antwort von dem unterstützten CN-Knoten **durch** Senden einer geänderten Nachricht (56) von dem Dienstknoten an den unterstützten CN-Knoten zu erhalten, wenn die im Voraus definierte Antwort nicht von dem unterstützten CN-Knoten empfangen wird.

8. Verfahren nach Anspruch 7, wobei der Schritt zum Versuchen, eine Antwort von dem unterstützten CN-Knoten durch Senden einer geänderten Nachricht zu erhalten, enthält:
wenn die im Voraus definierte Antwort von dem unterstützten CN-Knoten nicht nach zweimaligem Senden der standardisierten Nachricht empfangen wird. Erzeugen der geänderten Nachricht durch Ausschließen mindestens eines Informationselements aus der standardisierten Nachricht; und
Senden der geänderten Nachricht von dem CN-Dienstknoten an den unterstützten CN-Knoten für ein Mal, während auf die Antwort von dem unterstützten CN-Knoten gewartet wird.

9. Verfahren nach Anspruch 8, wobei der Schritt zum Erzeugen einer geänderten Nachricht enthält, im Voraus definierte optionale und/oder bedingte Informationselement aus der standardisierten Nachricht zu löschen.

10. Netzknoten (41) zum Versorgen von Mobilendgeräten in einem Funkkommunikationsnetz, der Netzknoten **gekennzeichnet durch**:
Mittel (44) zum Senden einer standardisierten Nachricht an ein Mobilendgerät (42) für maximal drei Mal, während auf eine im Voraus definierte Antwort von dem Mobilendgerät gewartet wird;
Mittel (45) zum Bestimmen, ob die im Voraus definierte Antwort von dem Mobilendgerät als Reaktion auf die standardisierte Nachricht empfangen wird: und
Mittel (46), reagierend auf eine Bestimmung, dass eine Antwort nicht empfangen wind, zum Senden einer geänderten Nachricht an das Mobilendgerät.

11. Netzknoten nach Anspruch 10, wobei das Mittel zum Senden einer geänderten Nachricht enthält;
Mittel zum Erzeugen der geänderten Nachricht durch Ausschließen mindestens eines aus der standardisierten Nachricht, wenn die im Voraus definierte Antwort von dem Mobilendgerät nicht nach dreimaligem Senden der standardisierten Nachricht empfangen wird; und
Mittel zum Senden der geänderten Nachricht von dem Netzknoten an das Mobilendgerät für maximal zwei MaI, während auf die im Voraus definierte Antwort von dem Mobilendgerät gewartet wird.

12. Netzknoten nach Anspruch 11, wobei das Mittel zum Erzeugen einer geänderten Nachricht Mittel zum Löschen von im Voraus definierten optionalen und/oder bedingten Informationselementen aus der standardisierten Nachricht enthält.

13. Netzknoten nach Anspruch 12, weiter umfassend Mittel, um die optionalen und bedingten durch Identifizieren von Informationselementen, die nicht von Mobilendgeräten, die nicht mit netztechnischen Spezifikationen kompatibel sind, verarbeitet werden können, im Voraus zu definieren.

14. Netzknoten nach Anspruch 11, weiter umfassend:
Mittel zum Speichern einer ID des Mobilendgeräts in einer Liste nicht kompatibler Mobilendgeräte, wenn die im Voraus definierte Antwort von dem Mobilendgerät als Reaktion auf die geänderte Nachricht empfangen wird;
Mittel zum Erkennen, dass das Mobilendgerät als ein nicht kompatibles Mobilendgerät aufgelistet ist, während einer zukünftigen Sitzung; und
Mittel zum Senden nur der geänderten Nachricht an das Mobilendgerät für maximal fünf Mal während der zukünftigen Sitzung.

15. Netzknoten nach Anspruch 14, weiter umfassend:
Mittel zum regelmäßigen Senden der standardisierten Nachricht an das Mobilendgerät; und
Mittel zum Entfernen der ID des Mobilendgeräts aus der Liste nicht kompatibler Mobilendgeräte, wenn das Mobilendgerät auf die standardisierte Nachricht antwortet.

16. Netzknoten nach Anspruch 10, wobei der Netzknoten eine Vielzahl von Mobilendgeräten versorgt, wobei ein erster Teil der Mobilendgeräte mit Netzspezifikationen kompatibel ist und ein zweiter Teil der Mobilendgeräte nicht mit den Netzspezifikationen kompatibel ist, der Netzknoten weiter umfassend:
Mittel zum Identifizieren eines gegebenen Mobilendgeräts als ein nicht kompatibles Mobilendgerät, wenn das gegebene Mobilendgerät auf die geänderte Nachricht antwortete; und
Mittel (55) zum Bereitstellen eines reduzierten Merkmalsatzes für das nicht kompatible Mobilendgerät, während kompatiblen Mobilendgeräten ein voller Merkmalssatz bereitgestellt wird.

17. Netzknoten nach Anspruch 16, wobei das Mittel zum Senden der geänderten Nachricht angepasst ist, um die geänderte Nachricht maximal zwei Mal zu senden, während auf eine Antwort von dem gegebenen Mobilendgerät gewartet wird.

18. Netzknoten nach Anspruch 17, weiter umfassend:
Mittel zum Speichern einer ID des gegebenen Mobilendgeräts in einer Liste nicht kompatibler Mobilendgeräte, wenn die Antwort von dem Mobilendgerät als Reaktion auf die geänderte Nachricht empfangen wird;
Mittel zum Erkennen, dass das Mobilendgerät als ein nicht kompatibles Mobilendgerät aufgelistet ist, während einer zukünftigen Setzung; und
Mittel zum Senden nur der geänderten Nachricht an das Mobilendgerät für maximal fünf Mal während der zukünftigen Sitzung.

19. Netzknoten nach Anspruch 18, weiter umfassend:
Mittel zum regelmäßigen Senden der standardisierten Nachricht an das Mobilendgeräl; und
Miltel zum Entfernen der ID des Mobilendgeräts aus der Liste nicht kömpatibler Mobilendgeräte, wenn das Mobilendgerät auf die standardisierte Nachricht antwortet.

20. nach Anspruch 19, wobei der Netzknoten ein versorgender GPRS-Dienstknoten, SGSN, ist.

## Revendications

1. Procédé destiné à prendre en charge des terminaux mobiles dans un réseau de télécommunication radio, ledit procédé étant **caractérisé en ce qu'**il comporte les étapes ci-dessous consistant à :
tenter d'obtenir une réponse prédéfinie en provenance d'un terminal mobile (42) en envoyant un message normalisé (44), d'un noeud de réseau (41) au terminal mobile, à trois reprises au maximum, en attendant la réponse prédéfinie du terminal mobile ; et
tenter d'obtenir une réponse en provenance du terminal mobile en envoyant un message modifié (46), du noeud de réseau au terminal mobile, lorsque la réponse prédéfinie n'est pas reçue à partir du terminal mobile en réponse à l'envoi du message normalisé à trois reprises.

2. Procédé selon la revendication 1, dans lequel l'étape consistant à tenter d'obtenir réponse du terminal mobile en envoyant un message modifié, comprend les étapes ci-dessous consistant à :
lorsque la réponse prédéfinie n'est pas reçue à partir du terminal mobile suite à l'envoi du message normalisé à trois reprises, créer le message modifié en excluant au moins un élément d'informations du message normalisé; et
envoyer le message modifié, du noeud de réseau au terminal mobile, à deux reprises au maximum, en attendant la réponse du terminal mobile.

3. Procédé selon la revendication 2, dans lequel l'étape de création d'un message modifié comprend l'étape consistant à supprimer des éléments d'informations optionnels et/ou conditionnels prédéfinis du message normalisé.

4. Procédé selon la revendication 3, comprenant en outre l'étape consistant à prédéfinir les éléments d'informations optionnels et/ou conditionnels en identifiant les éléments d'informations qui ne peuvent pas être traités par les terminaux mobiles qui ne sont pas conformes aux spécifications techniques de réseau.

5. Procédé, selon la revendication 2, comprenant en outre les étapes ci-dessous consistant à :
lorsque la réponse est reçue à partir du terminal mobile en réponse au message modifié, stocker un identifiant du terminal mobile dans une liste de terminaux mobiles non conformes ; et
lorsque le terminal mobile accède au noeud de réseau à un moment ultérieur:
reconnaître que le terminal mobile est un terminal mobile non conforme à partir de l'identifiant stocké ; et
envoyer uniquement le message modifié au terminal mobile, à cinq reprises au maximum, en attendant une réponse du terminal mobile non conforme.

6. Procédé selon la revendication 5, comprenant en outre les étapes ci-après consistant à :
envoyer périodiquement le message normalisé au terminal mobile ; et
si le terminal mobile répond au message normalisé, supprimer l'identifiant du terminal mobile de la liste de terminaux mobiles non conformes.

7. Procédé dans un noeud de serveur de réseau fédérateur, CN, (41), destiné à prendre en charge d'autres noeuds de réseau CN, ledit procédé étant **caractérisé en ce qu'**il comporte les étapes ci-dessous consistant à :
tenter d'obtenir une réponse prédéfinie en provenance d'un noeud de réseau CN pris en charge (51) en envoyant un message normalisé (53, 54), du noeud de service de réseau CN au noeud de réseau CN pris en charge, à deux reprises au maximum, en attendant la réponse prédéfinie du noeud de réseau CN pris en charge ; et
tenter d'obtenir une réponse en provenance du noeud de réseau CN pris en charge en envoyant un message modifié (56) du noeud de service au noeud de réseau CN pris en charge, lorsque la réponse prédéfinie n'est pas reçue du noeud de réseau CN pris en charge.

8. Procédé selon la revendication 7, dans lequel l'étape consistant à tenter d'obtenir une réponse du noeud de réseau CN pris en charge en envoyant un message modifié comprend les étapes ci-dessous consistant à :
si la réponse prédéfinie n'est pas reçue du noeud de réseau CN pris en charge suite à l'envoi du message normalisé à deux reprises, créer le message modifié en excluant au moins un élément d'informations du message normalisé ; et
envoyer le message modifié, du noeud de service de réseau CN au noeud de réseau CN pris en charge, à une seule reprise, en attendant la réponse du noeud de réseau CN pris en charge.

9. Procédé selon la revendication 8, dans lequel l'étape de création d'un message modifié comprend l'étape consistant à supprimer des éléments d'informations conditionnels et/ou optionnel prédéfinis du message normalisé.

10. Noeud de réseau (41) destiné à desservir des terminaux mobiles dans un réseau de télécommunication radio, ledit noeud de réseau étant **caractérisé en ce qu'**il comporte:
un moyen (44) pour envoyer une message normalisé à un terminal mobile (42), à trois reprises au maximum, en attendant une réponse prédéfinie en provenance du terminal mobile ;
un moyen (45) pour déterminer si la réponse prédéfinie est reçue du terminal mobile en réponse au message normalisé; et
un moyen (46), en réponse à une détermination que la réponse n'est pas reçue, pour envoyer un message modifié au terminal mobile.

11. Noeud de réseau selon la revendication 10, dans lequel le moyen pour envoyer un message modifié comprend :
un moyen pour créer le message modifié en excluant au moins un élément d'informations du message normalisé, lorsque la réponse prédéfinie n'est pas reçue à partir du terminal mobile suite à l'envoi du message normalisé à trois reprises ;
un moyen pour envoyer le message modifié, du noeud de réseau au terminal mobile, à deux reprises au maximum, en attendant la réponse prédéfinie du terminal mobile.

12. Noeud de réseau selon la revendication 11, dans lequel le moyen pour créer un message modifié comprend un moyen pour supprimer des éléments d'informations optionnels et ou conditionnels prédéfinis du message normalisé.

13. Noeud de réseau selon la revendication 12, comprenant en outre un moyen pour prédéfinir les éléments d'informations optionnels et/ou conditionnels en identifiant les éléments d'informations qui ne peuvent pas être traités par les terminaux mobiles qui ne sont pas conformes aux spécifications techniques de réseau.

14. Noeud de réseau selon la revendication 11, comprenant en outre :
un moyen pour stocker un identifiant du terminal mobile dans une liste de terminaux mobiles non conformes lorsque la réponse prédéfinie est reçue à partir du terminal mobile en réponse au message modifié ;
un moyen pour reconnaître que le terminal mobile est répertorié en qualité de terminal mobile non conforme au cours d'une session future ; et
un moyen pour envoyer uniquement le message modifié au terminal mobile, à cinq reprises au maximum, au cours de la session future.

15. Noeud de réseau selon la revendication 14, comprenant en outre :
un moyen pour envoyer périodiquement le message normalisé au terminal mobile; et
un moyen pour supprimer l'identifiant du terminal mobile de la liste de terminaux mobiles non conformes lorsque le terminal mobile répond au message normalisé.

16. Noeud de réseau selon la revendication 10, dans lequel le noeud de réseau dessert une pluralité de terminaux mobiles, dans lequel une première partie des terminaux mobiles est conforme aux spécifications de réseau et une seconde partie des terminaux mobiles n'est pas conforme aux spécifications de réseau, le noeud de réseau comprenant en outre :
un moyen pour identifier un terminal mobile donné en qualité de terminal mobile non conforme lorsque le terminal mobile donné a répondu au message modifié ; et
un moyen (55) pour fournir au terminal mobile non conforme un ensemble réduit de fonctionnalités tout en fournissant aux terminaux mobiles conformes un ensemble complet de fonctionnalités,

17. Noeud de réseau selon la revendication 16, dans lequel le moyen pour envoyer le message modifié est apte à envoyer le message modifié à deux reprises au maximum, en attendant une réponse du terminal mobile donné.

18. Noeud de réseau selon la revendication 17, comprenant en outre :
un moyen pour stocker un identifiant du terminal mobile donné dans une liste de terminaux mobiles non conformes lorsque la réponse est reçue à partir du terminal mobile en réponse au message modifié ;
un moyen pour reconnaître que le terminal mobile est répertorié en qualité de terminal mobile non conforme au cours d'une session future ; et
un moyen pour envoyer uniquement le message modifié au terminal mobile, à cinq reprises au maximum, au cours de la session future.

19. Noeud de réseau selon la revendication 18, comprenant en outre :
un moyen pour envoyer périodiquement le message normalisé au terminal mobile ; et
un moyen pour supprimer l'identifiant du terminal mobile de la liste de terminaux mobiles non conformes lorsque le terminal mobile répond au message normalisé.

20. Noeud de réseau selon la revendication 19, dans lequel le noeud de réseau est un noeud de support GPRS de service, SGSN.
